# EUROPÄISCHE PATENTSCHRIFT

(11) **EP 0 973 291 B1**
(45) Veröffentlichungstag und Bekanntmachung des Hinweises auf die Patenterteilung: **19.12.2007**
(21) Anmeldenummer: 99110564.4
(22) Anmeldetag: 01.06.1999
(51) Int. Cl.: H04J 14/02

(54) **Einrichtung und Verfahren zur Frequenzgangentzerrung von Wellenlängenmultiplex-Übertragungsstrecken**
System and method for frequency response equalization of wavelength mutiplexing transmission lines
Système et méthode d'égalisation de courbe de réponse en fréquence de lignes de transmission à multiplexage de longueurs d'ondes

(30) Priorität: 14.07.1998 DE 19831533
(43) Veröffentlichungstag der Anmeldung: 19.01.2000
(73) Patentinhaber: Ericsson AB, Stockholm (SE)
(72) Erfinder: Scheuing, Ernst-Ulrich, 71573 Allmersbach (DE); Tischer, Friedrich-Christian, 71522 Backnang (DE); Caspar, Christoph, 10823 Berlin (DE); Foisel, Hans-Martin, 13503 Berlin (DE); Strebel, Bernhard, 13469 Berlin (DE)
(74) Vertreter: Pellkofer, Dieter

(56) Entgegenhaltungen:
- US-A- 5 392 154
- US-A- 5 675 432
- "DYNAMIC GAIN EQUALIZATION SCHEME FOR MAN/WAN USING WDMA AND SEMICONDUCTOR OPTICAL AMPLIFIERS" IBM TECHNICAL DISCLOSURE BULLETIN, IBM CORP. NEW YORK, US, Bd. 37, Nr. 4B, 1. April 1994 (1994-04-01), Seiten 9-11, XP000451152 ISSN: 0018-8689
- PATENT ABSTRACTS OF JAPAN Bd. 1998, Nr. 05, 30. April 1998 (1998-04-30) & JP 10 013357 A (NEC CORP), 16. Januar 1998 (1998-01-16)
- PATENT ABSTRACTS OF JAPAN Bd. 0163, Nr. 37 (P-1390), 22. Juli 1992 (1992-07-22) & JP 4 101124 A (SUMITOMO ELECTRIC IND LTD), 2. April 1992 (1992-04-02)

## Beschreibung

Die Erfindung betrifft eine Einrichtung und ein Verfahren zur Frequenzgangentzerrung für Wellenlängenmultiplex-Übertragungsstrecken mit den im Oberbegriff des Anspruchs 1 beziehungsweise des Anspruchs 14 genannten Merkmalen.

### Stand der Technik

Bekannte optische Übertragungssysteme weisen grundsätzlich den Nachteil einer Signalabschwächung auf langen Strecken auf. Die Ursachen liegen neben den zahlreichen Koppelstellen unter anderem an unvermeidlichen Verunreinigungen in den Lichtwellenleitern, die für eine geringe Auskoppelung von Lichtsignalen verantwortlich sind. Zudem tritt insbesondere bei längeren, mit einem sogenannten Wellenlängenmultiplex (Wavelength-Division-Multiplex - WDM) betriebenen Strecken mit mehreren optischen Zwischenverstärkern das zusätzliche Problem auf, daß wegen eines gewissen Frequenzganges der optischen Faser und eines über der optischen Frequenz nicht völlig ebenen Verstärkungsfaktors der dabei verwendeten optischen Verstärker erhebliche Frequenzgangverzerrungen auftreten können. Hierdurch entsteht bei den mit geringerer Verstärkung arbeitenden Kanälen eine signifikante Verschlechterung des Signal-Rauschverhältnisses. Für die Kanäle mit größerer Verstärkung entsteht dagegen eine unerwünschte, gegebenenfalls sogar unzulässige Anhebung der Signalamplitude.

Zur Vermeidung solcher Effekte ist es bekannt, entzerrende Einrichtungen einzusetzen. Diese müssen nicht unbedingt in jedem Zwischenverstärker vorgesehen sein, sondern können in längeren Strecken in größeren Abständen eingefügt werden. Bekannt ist es beispielsweise, frequenzselektive passive Komponenten in den Übertragungsweg einzuschleifen, die in ähnlicher Weise wie Filter wirken und eine entsprechende Egalisierung der Verstärkung im Übertragungsband vornehmen können. Einer jeden solchen Schaltung können erforderlichenfalls für das gesamte WDM-Übertragungsband wirkende optische Verstärker vor- beziehungsweise nachgeschaltet werden.

Ein vergleichbarer Effekt wird erzielt, wenn die einzelnen Kanäle in kanalbezogenen optischen Verstärkern getrennt verstärkt und dadurch begrenzt werden, daß die optischen Kanalverstärker an ihrer Aussteuerungsgrenze betrieben werden. Hinter einem solchen entzerrenden Leitungsverstärker ist die Amplitude aller Kanäle prinzipiell wieder gleich einstellbar. Das letztere Verfahren erlaubt jedoch keine sehr genaue Begrenzung des Signales und somit keine genaue Amplitudeneinstellung. Ein Beispiel dieses Verfahrens ist in US-Patent-No. 5675432 dargelegt.

### Vorteile der Erfindung

Die Einrichtung zur Frequenzgangentzerrung mit den im Anspruch 1 genannten Merkmalen weist den Vorteil auf, mit bekannten Bauteilen eine sehr effektive und gleichmäßige Verstärkung eines Wellenlängenmultiplex-Signales zu erreichen. So ist in einer einfachen Ausführung vorgesehen, ein Signal mittels eines WDM-Demultiplexers in seine einzelnen Wellenlängenkanäle aufzuteilen, diese Wellenlängenkanäle einzeln zu bearbeiten und danach in einem WDM-Multiplexer wieder zusammenzuführen. Die Bearbeitung erfolgt vorzugsweise durch optische Frequenzumsetzer, die eine optoelektrische Wandlung, einen Verstärker für das elektrische Signal und eine elektrooptische Rückwandlung aufweisen, und die insgesamt eine Verstärkungswirkung besitzen. Durch eine Betriebsweise dieser optischen Frequenzumsetzer, die eine Einstellung der Ausgangsamplitude sicherstellt, kann eine exakte Gleichheit der Amplituden der einzelnen Wellenlängenkanäle erreicht werden. Die Einrichtungen der beschriebenen Art werden auch als Transponder bezeichnet. Zur Verstärkung des WDM-Multiplexsignales kann vor dem WDM-Demultiplexer optional ein optischer Verstärker vorgesehen sein, ebenso nach dem WDM-Multiplexer.

In einer weiteren Ausgestaltung der Erfindung werden als optische Frequenzumsetzer Bauteile verwendet, die ohne Wandlung in ein elektrisches Signal, das heißt auf rein optischem Wege, arbeiten.

In einer einfachen Ausgestaltung werden die optischen Frequenzumsetzer mit gleicher Ein- und Ausgangsfrequenz betrieben. Die optischen Frequenzumsetzer können jedoch auch mit unterschiedlichen Eingangs- und Ausgangsfrequenzen betrieben werden, wobei eine zyklische oder eine andersartige, dem Gang der Verzerrungen angepaßte Vertauschung der Kanalfrequenzen im Verlauf einer längeren optischen Übertragungsstrecke nach einem bestimmten Schema einmal oder mehrmals derart erfolgt, daß über die gesamte optische Strecke jeder einzelne Wellenlängenkanal annähernd die gleiche resultierende Dämpfung und Verstärkung erfährt, so daß alle Kanäle des WDM-Multiplexsignales an einem Zielort annähernd gleiche Amplitude und gleiches Signal-Rauschverhältnis aufweisen. Damit wird dem Effekt Rechnung getragen, daß Signale unterschiedlicher Wellenlänge bei der optischen Signalübertragung eine unterschiedliche Dämpfung erfahren. Dies kann durch die erfindungsgemäße Einrichtung in sehr einfacher Weise ausgeglichen werden. Das Vertauschungsschema zur Vertauschung der einzelnen Frequenzen (Wellenlängen) kann dabei fest vorgegeben oder fallbezogen einstellbar sein.

In weiterer Ausgestaltung der Erfindung wird eine erhöhte Flexibilität dadurch erreicht, daß die Kanalvertauschung mittels einer optischen Schaltmatrix erfolgt, die je nach Bedarf von einem Benutzer beeinflußt die Kanalfrequenzen vertauschen kann.

Als weiterer Vorteil der beschriebenen Anordnung ist anzusehen, daß die frequenzgangentzerrenden optischen Zwischenverstärker nicht nur zu einer statischen Pegelstabilisierung dienen, sondern auch optische Transienten reduzieren, die beispielsweise bei Pegelsprüngen, Schaltvorgängen oder Kanalausfällen auftreten. Gerade bei geschalteten optischen Netzen ist dies eine wichtige Eigenschaft, da sowohl empfangene Transienten reduziert als auch die Entstehung neuer Transienten verhindert wird.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
Figur 1a ein Prinzipschaltbild einer Frequenzgangentzerrung eines WDM-Übertragungssystems nach der Erfindung;
Figur 1b ein Prinzipschaltbild einer verstärkenden Einrichtung mit optoelektrischer und elektrooptischer Wandlung und kontrollierter elektrischer Verstärkung;
Figur 2 ein Prinzipschaltbild einer Frequenzgangentzerrung mit zyklischer Vertauschung von Kanälen;
Figur 3 ein Prinzipschaltbild einer Frequenzgangentzerrung mit steuerbarer Kanalvertauschung und
Figur 4 eine bekannte Schaltung zur Entzerrung eines optischen Frequenzganges mit begrenzenden optischen Kanalverstärkern.

### Beschreibung des Ausführungsbeispiels

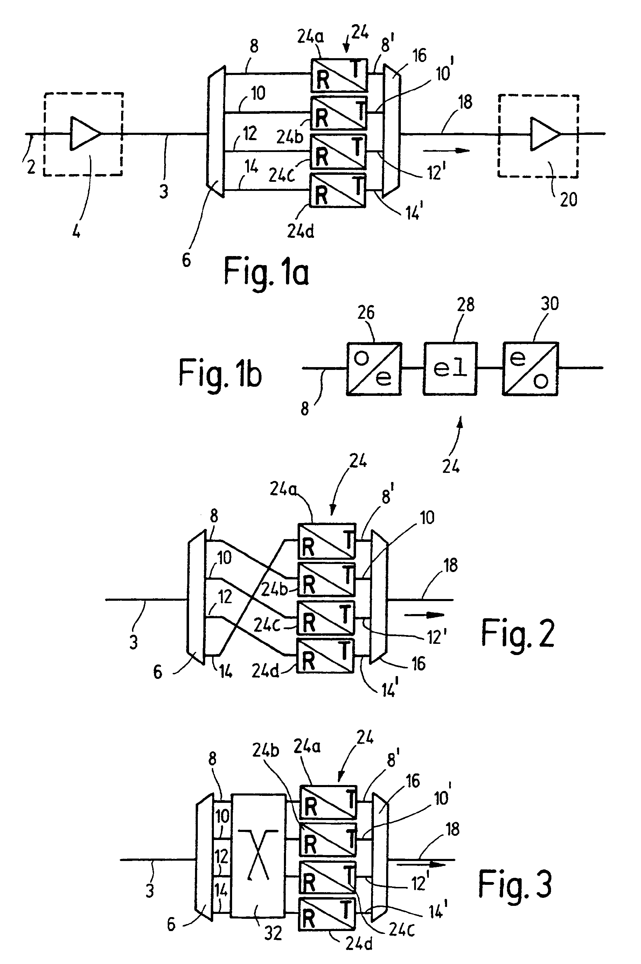

Figur 1a zeigt in einem Prinzipschaltbild eine erste Variante einer Schaltung zur Frequenzgangentzerrung von WDM-Strecken, bei der einzelne Wellenlängenmultiplex-Kanäle (WDM-Kanäle) aufgeteilt, kanalbezogen über optische Frequenzumsetzer mit amplitudenkontrollierender Wirkung geführt und anschließend wieder zusammengefaßt werden. Im dargestellten Ausführungsbeispiel wird ein am Eingang 2 und durch einen optional vorzusehenden optischen Verstärker 4 einkommendes optisches Signal in vier Kanäle aufgeteilt; die Zahl der Kanäle ist jedoch nicht begrenzt und kann zum Beispiel sechzehn oder auch mehr betragen. Die Aufteilung erfolgt in einem frequenzselektierenden WDM-Demultiplexer 6, der einen Eingang 3 sowie vier Ausgänge 8, 10, 12, 14 mit vier frequenzselektierten Kanälen aufweist. Diese Ausgänge 8, 10, 12, 14 führen jeweils zu einem optischen Frequenzumsetzer 24a, 24b, 24c, 24d und werden anschließend in einem WDM-Multiplexer 16 mit zum Demultiplexer korrespondierenden Eingängen 8', 10', 12', 14' wieder zusammengeführt und als gemeinsames Signal zum Ausgang 18 geführt. Auch hier können sie anschließend nochmals einen optionalen Verstärker 20 durchlaufen. Diese einfachste Ausführung eines optischen Frequenzumsetzers weist für jeden Kanal gleiche Eingangs- und Ausgangsfrequenzen auf, dient somit nicht der Frequenzumsetzung, sondern ausschließlich der Amplitudenstabilisierung und -einstellung.

Figur 1b zeigt in einem Ausführungsbeispiel einer bestimmten Form eines optischen Frequenzumsetzers einen sogenannten Transponder 24 mit einer optisch-elektrisch-optischen Funktionsweise, die bitratenselektiv oder breitbandig sein kann. Ein frequenzselektiertes Eingangssignal 8 durchläuft einen optoelektrischen Wandler 26, der selbst nicht frequenzselektiv ist, wird im Verstärkerteil 28 elektrisch verstärkt und anschließend im elektrooptischen Wandler 30 in ein optisches Signal zurückgewandelt. Der Transponder 24 kann beispielsweise mit einer amplitudenbegrenzenden Schaltung im elektrischen Verstärkerteil 28 ausgestattet sein, die in gewissen Grenzen eine von der optischen Eingangsamplitude unabhängige optische Ausgangsamplitude sicherstellt. Grundsätzlich möglich ist auch eine Ausführung der optischen Frequenzumsetzer 24 auf rein optischem Wege, das heißt ohne zweimalige Wandlung in ein elektrisches und wieder zurück in ein optisches Signal.

Figur 2 zeigt eine Ausgestaltung der erfindungsgemäßen Frequenzgangentzerrung, bei der die Frequenzumsetzer beziehungsweise Transponder 24 mit zyklisch vertauschten optischen Eingangs- und Ausgangsfrequenzen betrieben werden. Gleiche Teile wie in Figur 1 sind mit gleichen Bezugszeichen versehen und nicht nochmals erläutert. Hierbei kann eine Vertauschung der Kanalfrequenzen im Verlauf einer Strecke nach einem festzulegenden Schema ein- oder mehrmals so erfolgen, daß über eine gesamte längere Strecke jeder einzelne Kanal annähernd eine gleich große resultierende Dämpfung beziehungsweise Verstärkung erfährt, so daß alle einzelnen Kanäle auf der Übertragungsstrecke annähernd die gleichen Beeinträchtigungen erfahren haben und am Ende mit annähernd gleicher Amplitude und gleichem Signal-Rauschverhältnis ankommen.

In Figur 2 ist ein Beispiel einer zyklischen Vertauschung von Eingangs- und Ausgangssignalen dargestellt. Im gezeigten Ausführungsbeispiel wird ein am Eingang 3 einkommendes optisches Signal im WDM-Demultiplexer 6 in vier Wellenlängenbereiche aufgeteilt, das heißt zu vier Ausgängen 8, 10, 12, 14 geführt. Der Ausgang 8 führt zum Transponder 24b, der Ausgang 10 zum Transponder 24c und der Ausgang 12 zum Transponder 24d. Der Ausgang 14 führt schließlich zum Transponder 24a, der an den Eingang 8' angeschaltet ist, so daß eine zyklische Vertauschung der Kanäle erfolgt. Im WDM-Multiplexer 16 werden die Kanäle wieder zusammengeführt und zum Ausgang 18 geleitet. Die Umschaltung beziehungsweise Vertauschung der Kanalfrequenzen kann in vorteilhafter Weise im Verlaufe einer längeren optischen Übertragungsstrecke mehrmals nach dem gleichen beschriebenen Schema erfolgen. Ebenso möglich sind entsprechende Rücktauschungen der Kanäle.
Figur 3 zeigt eine weitere Schaltung, die eine steuerbare Vertauschung der Kanäle ermöglicht, wobei gleiche Teile wie in den vorangegangenen Figuren mit gleichen Bezugszeichen versehen sind. Ein einkommendes Signal am Eingang 3 im WDM-Demultiplexer 6 wird in vier frequenzselektierte Kanälen 8, 10, 12, 14 aufgeteilt. In der steuerbaren optischen Schaltmatrix 32 können die Kanäle in unterschiedlicher Weise auf die vier Transponder 24a, 24b, 24c, 24d verteilt werden. Die Schaltmatrix 32 ermöglicht eine fallbezogene Vertauschung der Kanäle, die je nach Notwendigkeit auch geändert werden kann.

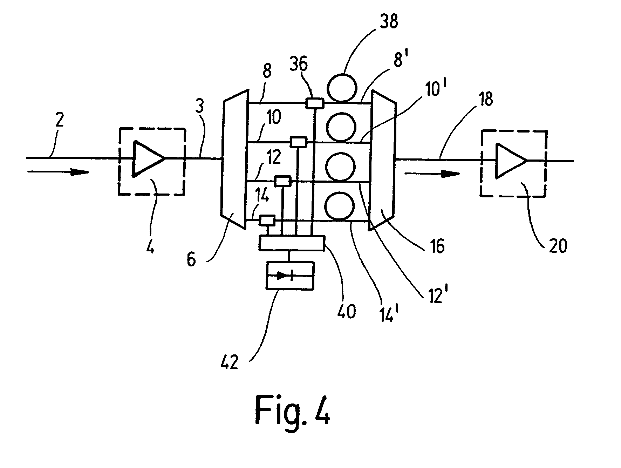

Figur 4 zeigt zur Verdeutlichung des Prinzips eine bekannte Schaltung entsprechend dem Stand der Technik, wobei gleiche Teile wie in den vorhergehenden Figuren wiederum mit gleichen Bezugszeichen versehen sind. Ein am Eingang 2 einkommendes WDM-Signal kann einen optionalen Verstärker 4 durchlaufen und wird anschließend im Umsetzer beziehungsweise WDM-Demultiplexer 6 in einzelne Kanäle 8, 10, 12, 14 aufgeteilt. Die einzelnen frequenzselektierten Kanäle 8, 10, 12, 14 durchlaufen jeweils einen eigenen kanalbezogenen optischen Verstärker 38 mit Kopplern 36, in dem sie getrennt verstärkt werden. Im gezeigten Beispiel wird dabei ein gemeinsamer Pumplaser 42 verwendet.

Um die einzelnen Verstärker 38 frequenzselektiv ansteuern zu können, durchläuft das Lasersignal des Pumplasers 42 einen optischen Koppler 40, der die Gesamtleistung auf die optischen Verstärker 38 aufteilt. Die optischen Verstärker 38 können dadurch in ihrer Amplitude begrenzt werden, daß sie an ihrer Aussteuerungsgrenze betrieben werden. Hinter einem solchen entzerrenden Leitungsverstärker ist die Amplitude aller Kanäle prinzipiell auf den gleichen Wert einstellbar. Dieses Verfahren erlaubt jedoch keine sonderlich genaue Begrenzung des Signals und damit keine genaue Amplitudeneinstellung.

## Patentansprüche

1. Einrichtung zur Frequenzgangentzerrung von optischen Nachrichtensignalen, die über ein Wellenlängenmultiplex(Wavelength Division Multiplex, WDM)-Verfahren wenigstens zwei Wellenlängenkanäle besitzen und über wenigstens einen optischen Zwischenverstärker über eine Strecke übertragen werden, wobei die wenigstens zwei Wellenlängenkanäle der übertragenen Nachrichtensignale kanalselektiv jeweils die Einrichtung durchlaufen, wobei die Einrichtung eine optische Einrichtung mit Verstärkungsfunktion ist und einen WDM- <HHY>WDM-Demultiplexer (6) mit wenigstens zwei frequenzselektierten Ausgängen (8, 10, 12, 14), einen nachfolgenden WDM-Multiplexer (16) sowie jeweils eine Verstärkungseinheit zwischen jedem der Ausgänge (8, 10, 12, 14) und entsprechenden Eingängen (8', 10', 12', 14') des nachfolgenden WDM-Multiplexers (16) aufweist,
**dadurch gekennzeichnet,**
**dass** die Verstärkungseinheit jeweils als optischer Frequenzumsetzer (24) ausgebildet ist, der einen Verstärkerteil (28) zum Einstellen der Ausgangsamplitude des jeweiligen Wellenlängenkanals umfasst.

2. Einrichtung nach Anspruch 1,
**dadurch gekennzeichnet,**
**dass** dem WDM-Demultiplexer (6) ein optischer Verstärker (4) vorgeschaltet ist.

3. Einrichtung nach einem der Ansprüche 1 oder 2,
**dadurch gekennzeichnet,**
**dass** dem WDM-Multiplexer (16) ein optischer Verstärker (20) nachgeschaltet ist.

4. Einrichtung nach einem der vorhergehenden Ansprüche,
**dadurch gekennzeichnet,**
**dass** die optischen Frequenzumsetzer (24) jeweils über eine Einrichtung zur Amplitudenkontrolle der einzelnen WDM-Kanäle verfügen.

5. Einrichtung nach einem der vorhergehenden Ansprüche,
**dadurch gekennzeichnet,**
**dass** die optischen Frequenzumsetzer (24) ausgebildet sind, eine erste Wandlung in ein elektrisches Signal und eine Rückwandlung in ein optisches Signal durchzuführen.

6. Einrichtung nach Anspruch 5,
**dadurch gekennzeichnet,**
**dass** die optischen Frequenzumsetzer (24) ausgebildet sind, eine kontrollierte Verstärkung des elektrischen Signals durchzuführen.

7. Einrichtung nach einem der Ansprüche 1 bis 4**,**
**dadurch gekennzeichnet,**
**dass** die optischen Frequenzumsetzer (24) ausgebildet sind, auf rein optischem Wege zu arbeiten.

8. Einrichtung nach einem der vorhergehenden Ansprüche,
**dadurch gekennzeichnet,**
**dass** die optischen Frequenzumsetzer (24) jeweils eine fest eingestellte Ausgangsamplitude aufweisen.

9. Einrichtung nach einem der vorhergehenden Ansprüche,
**dadurch gekennzeichnet,**
**dass** die Ausgangsfrequenz jedes optischen Frequenzumsetzers (24) gleich der Eingangsfrequenz ist.

10. Einrichtung nach einem der Ansprüche 1 bis 8,
**dadurch gekennzeichnet,**
**dass** die Ausgangsfrequenz jedes optischen Frequenzumsetzers (24) unterschiedlich von der Eingangsfrequenz ist.

11. Einrichtung nach einem der vorhergehenden Ansprüche,
**dadurch gekennzeichnet,**
**dass** die Ausgänge (8, 10, 12, 14) des WDM-Demultiplexers (6) so über die Frequenzumsetzer (24) an die Eingänge (8', 10', 12', 14') des WDM-Multiplexers (16)angeschlossen sind, dass eine Vertauschung einzelner Kanalfrequenzen erfolgt.

12. Einrichtung nach Anspruch 11,
**dadurch gekennzeichnet,**
**dass** die Ausgänge (8, 10, 12, 14) des WDM-Demultiplexers (6) so über die Frequenzumsetzer (24) an die Eingänge (8', 10', 12', 14') des WDM-Multiplexers (16) angeschlossen sind, dass bei mehreren hintereinander geschalteten Einrichtungen eine zyklische Vertauschung der Kanalfrequenzen erfolgt.

13. Einrichtung nach einem der Ansprüche 11 oder 12,
**dadurch gekennzeichnet,**
**dass** zur Vertauschung der Kanalfrequenzen zwischen dem WDM-Demultiplexer (6) und dem WDM-Multiplexer (16) eine optische Schaltmatrix (32) vorgesehen ist.

14. Verfahren zur Frequenzgangentzerrung von optischen Nachrichtensignalen, die über ein Wellenlängenmultiplex(Wavelength Division Multiplex, WDM)-Verfahren wenigstens zwei Wellenlängenkanäle besitzen und über wenigstens einen optischen Zwischenverstärker über eine Strecke übertragen werden, wobei die wenigstens zwei Wellenlängenkanäle der übertragenen Nachrichtensignale kanalselektiv jeweils wenigstens eine optische Einrichtung mit Verstärkungsfunktion durchlaufen und das Wellenlängenmultiplex-Signal nach einer Aufteilung in die wenigstens zwei Wellenlängenkanäle kanalselektiv verstärkt wird und anschließend wieder in ein Wellenlängenmultiplex-Signal zusammengeführt wird,
**dadurch gekennzeichnet,**
**dass** die kanalselektive Verstärkung der wenigstens zwei Wellenlängenkanäle jeweils in einem Frequenzumsetzer erfolgt, der einen Verstärkerteil zum Einstellen der Ausgangsamplitude des jeweiligen Wellenlängenkanals umfasst.

15. Verfahren nach Anspruch 14,
**dadurch gekennzeichnet,**
**dass** die Verstärkung einzelner Wellenlängenkanäle derart erfolgt, dass die Signale in allen Wellenlängenkanälen am Ausgang (18)der optischen Einrichtung gleiche Amplitude und gleiche Signal-Rausch-Verhältnisse aufweisen.

## Claims

1. A device for the equalisation of frequency response of optical communication signals which have at least two wavelength channels via a wavelength multiplex (wavelength division multiplex, WDM) process and are transmitted over a path via at least one intermediate optical amplifier, with the at least two wavelength channels of the transmitted communication signals each running through the device in a channel selective manner, with the device being an optical device with an amplification function and having a WDM demultiplexer (6) with at least two frequency-selected outputs (8, 10, 12, 14), a subsequent WDM multiplexer (16) as well as a respective amplifier unit between each of the outputs (8, 10, 12, 14) and the corresponding inputs (8', 10', 12', 14') of the following WDM multiplexer (16),
**characterized in that**
the amplification unit is in each case made as an optical frequency converter (24) which includes an amplifier part (28) for the setting of the output amplitude of the respective wavelength channel.

2. A device in accordance with claim 1, **characterised in that** an optical amplifier (4) is connected before the WDM demultiplexer (6).

3. A device in accordance with one of the claims 1 or 2, **characterised in that** an optical amplifier (20) is connected after the WDM demultiplexer (16) .

4. A device in accordance with any one of the preceding claims, **characterised in that** the optical frequency converters (24) each have a device for the amplitude control of the individual WDM channels.

5. A device in accordance with any one of the preceding claims, **characterized in that** the optical frequency converters (24) are made to carry out a first conversion into an electrical signal and a reconversion into an optical signal.

6. A device in accordance with claim 5, **characterised in that** the optical frequency converters (24) are made to carry out a controlled amplification of the electrical signals.

7. A device in accordance with any one of the claims 1 to 4, **characterised in that** the optical frequency converters (24) are made to work in a purely optical manner.

8. A device in accordance with any one of the preceding claims, **characterised in that** the optical frequency converters (24) each have a fixedly set output amplitude.

9. A device in accordance with any one of the preceding claims, **characterised in that** the output frequency of each optical frequency converter (24) is equal to the input frequency.

10. A device in accordance with any one of the claims 1 to 8, **characterised in that** the output frequency of each optical frequency converter (24) is different to the input frequency.

11. A device in accordance with any one of the preceding claims, **characterised in that** the outputs (8, 10, 12, 14) of the WDM demultiplexer (6) are connected to the inputs (8', 10', 12', 14') of the WDM multiplexer (16) via the frequency converters (24) such that a transposition of individual channel wavelengths takes place.

12. A device in accordance with claim 11, **characterised in that** the outputs (8, 10, 12, 14) of the WDM demultiplexer (6) are connected to the inputs (8', 10 ', 12', 14') of the WDM multiplexer (16) via the frequency converters (24) such that a cyclic transposition of the channel wavelengths takes place with a plurality of sequentially connected devices.

13. A device in accordance with one of the claims 11 or 12, **characterised in that** an optical switching matrix (32) is provided for the transposition of the channel frequencies between the WDM demultiplexer (6) and the WDM multiplexer (16) .

14. A method for the equalisation of frequency response of optical communication signals which have at least two wavelength channels over a wavelength multiplex (wavelength division multiplex, WDM) process and are transmitted over a path via at least one intermediate optical amplifier, with the at least two wavelength channels of the transmitted communication signals each running through at least one optical device with amplification function in a channel selective manner and the wavelength multiplex signal being amplified in a channel selective manner after a split into the at least two wavelength channels and subsequently being recombined into a wavelength multiplex signal,
**characterised in that**
the channel-selective amplification of the at least two wavelength channels each take place in a frequency converter which includes an amplifier part for the setting of the output amplitude of the respective wavelength channel.

15. A method in accordance with claim 14, **characterised in that** the amplification of individual wavelength channels takes place such that the signals have the same amplitude and the same signal-to-noise rations in all the wavelength channels at the output (18) of the optical device.

## Revendications

1. Système d'égalisation de la réponse en fréquence de signaux de communication optiques qui possèdent au moins deux canaux de longueur d'ondes par un procédé de multiplexage de longueur d'onde (Wavelength Division Multiplex, WDM) et qui sont transmis sur un trajet par l'intermédiaire d'au moins un amplificateur intermédiaire optique, lesdits au moins deux canaux de longueur d'ondes des signaux de communication transmis traversant le système de manière respectivement sélective vis-à-vis des canaux, le système étant un système optique à fonction d'amplification et comprenant un démultiplexeur WDM (6) muni d'au moins deux sorties sélectionnées en fréquence (8, 10, 12, 14), un multiplexeur WDM successif (16) ainsi qu'une unité d'amplification respective entre chacune des sorties (8, 10, 12, 14) et les entrées correspondantes (8', 10', 12', 14') du multiplexeur WDM successif (16),
**caractérisé en ce que**
l'unité d'amplification est réalisée sous forme de convertisseur de fréquence optique respectif (24) qui comprend une partie amplificateur (28) pour régler l'amplitude de sortie du canal de longueur d'onde respectif.

2. Système selon la revendication 1,
**caractérisé en ce que**
un amplificateur optique (4) est branché en amont du démultiplexeur WDM (6).

3. Système selon l'une des revendications 1 ou 2,
**caractérisé en ce que**
un amplificateur optique (20) est branché en aval du multiplexeur WDM (16).

4. Système selon l'une des revendications précédentes,
**caractérisé en ce que**
les convertisseurs de fréquence optiques (24) disposent chacun d'un dispositif de contrôle d'amplitude des canaux WDM individuels.

5. Système selon l'une des revendications précédentes,
**caractérisé en ce que**
les convertisseurs de fréquence optiques (24) sont réalisés pour mettre en oeuvre une première conversion en un signal électrique et une reconversion en un signal optique.

6. Système selon la revendication 5,
**caractérisé en ce que**
les convertisseurs de fréquence optiques (24) sont réalisés pour mettre en oeuvre une amplification contrôlée du signal électrique.

7. Système selon l'une des revendications 1 à 4,
**caractérisé en ce que**
les convertisseurs de fréquence optiques (24) sont réalisés pour opérer par voie purement optique.

8. Système selon l'une des revendications précédentes,
**caractérisé en ce que**
les convertisseurs de fréquence optiques (24) présentent chacun une amplitude de sortie réglée de manière fixe.

9. Système selon l'une des revendications précédentes,
**caractérisé en ce que**
la fréquence de sortie de chaque convertisseur de fréquence optique (24) est égale à la fréquence d'entrée.

10. Système selon l'une des revendications 1 à 8,
**caractérisé en ce que**
la fréquence de sortie de chaque convertisseur de fréquence optique (24) diffère de la fréquence d'entrée.

11. Système selon l'une des revendications précédentes,
**caractérisé en ce que**
les sorties (8, 10, 12, 14) du démultiplexeur WDM (6) sont branchées aux entrées (8', 10', 12', 14') du multiplexeur WDM (16) via les convertisseurs de fréquence (24) de telle sorte qu'il s'effectue une permutation de fréquences de canal individuelles.

12. Système selon la revendication 11,
**caractérisé en ce que**
les sorties (8, 10, 12, 14) du démultiplexeur WDM (6) sont branchées aux entrées (8', 10', 12', 14') du multiplexeur WDM (16) via les convertisseurs de fréquence (24) de telle sorte que dans le cas de plusieurs systèmes branchés les uns derrière les autres, il s'effectue une permutation cyclique des fréquences de canal.

13. Système selon l'une des revendications 11 ou 12,
**caractérisé en ce que**
pour la permutation des fréquences de canal entre le démultiplexeur WDM (6) et le multiplexeur WDM (16), il est prévu une matrice de commutation optique (32).

14. Procédé d'égalisation de la réponse en fréquence de signaux de communication optiques qui possèdent au moins deux canaux de longueur d'ondes par un procédé de multiplexage de longueur d'onde (Wavelength Division Multiplex, WDM) et qui sont transmis sur un trajet par l'intermédiaire d'au moins un amplificateur intermédiaire optique, lesdits au moins deux canaux de longueur d'ondes des signaux de communication transmis traversant au moins un système optique à fonction d'amplification de manière respectivement sélective vis-à-vis des canaux, et le signal de multiplexage de longueur d'onde étant amplifié, après une subdivision en lesdits au moins deux canaux de longueur d'onde, de manière respectivement sélective vis-à-vis des canaux, et ensuite il est regroupé en un signal de multiplexage de longueur d'onde,
**caractérisé en ce que**
l'amplification sélective vis-à-vis des canaux desdits au moins deux canaux de longueur d'onde s'effectue dans un convertisseur de fréquence respectif qui comprend une partie amplificateur pour régler l'amplitude de sortie du canal de longueur d'onde respectif.

15. Procédé selon la revendication 14,
**caractérisé en ce que**
l'amplification de canaux de longueur d'onde individuels s'effectue de telle sorte que les signaux dans tous les canaux de longueur d'onde présentent la même amplitude et les mêmes rapports signal/bruit à la sortie (18) du système optique.
